# FASCICULE DE BREVET EUROPEEN

(11) **EP 0 591 043 B1**
(45) Date de publication et mention de la délivrance du brevet: **12.07.1995**
(21) Numéro de dépôt: 93402365.6
(22) Date de dépôt: 28.09.1993
(51) Int. Cl.: B65D 83/42, F16K 15/14

(54) **Récipient de conditionnement de type aérosol rechargeable en gaz comprimé**
Mit Druckgas wiederfüllbarer Aerosolverpackungsbehälter
Aerosol type packaging container refillable with compressed gas

(30) Priorité: 28.09.1992 FR 9211535
(43) Date de publication de la demande: 06.04.1994
(73) Titulaire: L'OREAL, 75008 Paris (FR)
(72) Inventeur: Lasserre, Pierre, F-93470 Coubron (FR); Konig, Nicole, F-95140 Villebon Sur Yvette (FR)
(74) Mandataire: Leszczynski, André

(56) Documents cités:
- EP-A- 0 170 007
- FR-A- 2 380 075
- US-A- 3 661 174
- US-A- 4 762 149

## Description

La présente invention est relative à un récipient de conditionnement de type aérosol, comportant une enveloppe extérieure, généralement cylindrique, apte à contenir un gaz comprimé, notamment de l'air comprimé, et un liquide destiné à être expulsé sous forme de spray ou de mousse au travers d'une buse de distribution par actionnement d'une valve de distribution montée à la partie supérieure de l'enveloppe et éventuellement reliée à un tube plongeur.

Plus précisément, l'invention est relative à un tel récipient de conditionnement, de type rechargeable en gaz comprimé, et comportant à cet effet, de préférence dans sa paroi de fond, un embout de remplissage, traversant de manière étanche la paroi de l'enveloppe et pourvu à son extrémité extérieure de moyens pour le raccordement à une source de gaz comprimé, tel qu'un compresseur, et, à son extrémité intérieure, d'un orifice débouchant dans le récipient.

Pour assurer l'étanchéité du récipient, l'on a prévu de mettre en place sur l'extrémité intérieure de l'embout une membrane élastique munie de trous périphériques. Lors d'une admission de gaz comprimé, la membrane se soulève de l'extrémité de l'embout, à l'aplomb de l'orifice ménagé dans celui-ci, et le gaz comprimé pénètre dans le récipient au travers des trous périphériques de la membrane.

Lorsque l'alimentation en gaz comprimé est supprimée, la membrane vient à nouveau s'appliquer sur l'extrémité de l'embout en recouvrant l'orifice ménagé dans celui-ci.

Dans une telle réalisation, le gaz comprimé est introduit dans le récipient dans la partie inférieure de celui-ci contenant le liquide, ce qui entraîne la formation de bulles dans le liquide et ainsi la formation d'une mousse dans le récipient.

En outre, la membrane réalisée à l'extrémité de l'embout est en contact avec le liquide et se trouve ainsi exposée à une agression chimique susceptible d'affecter ses qualités et donc entraîner des problèmes de défauts d'étanchéité au travers de l'embout.

Une autre réalisation, connue par FR-A-2 380 075, consiste à réaliser l'embout sous la forme d'une soupape de remplissage munie de moyens anti-retour à ressort et raccordée à un tube de remplissage dont l'extrémité libre débouche dans l'enveloppe du récipient au-dessus du niveau du liquide contenu dans celui-ci.

Cette solution rend plus complexes la réalisation de l'embout et son montage sur l'enveloppe sans pour autant éviter les problèmes de défauts d'étanchéité mentionnés précédemment.

La présente invention se propose de réaliser un récipient de type aérosol, rechargeable en gaz comprimé, permettant d'éviter par des moyens simples et économiques les inconvénients des réalisations connues.

Le récipient selon l'invention comprend, raccordé intérieurement à l'embout de remplissage, un tube de remplissage dont l'extrémité libre débouche dans l'enveloppe du récipient au-dessus du niveau du liquide contenu dans celui-ci, et un dispositif d'étanchéité agencé sous forme de boîtier, de préférence cylindrique, comportant intérieurement une chambre délimitée entre une paroi inférieure et une paroi supérieure. Ce récipient se caractérise par le fait que le dispositif d'étanchéité est monté à l'extrémité libre du tube de remplissage, ladite chambre communiquant avec le volume intérieur de l'enveloppe par au moins un orifice ménagé dans la paroi supérieure, et avec le tube de remplissage par des orifices ménagés dans la paroi inférieure à l'extérieur d'une partie centrale de celle-ci, et ladite chambre renfermant une membrane élastique immobilisée dans sa partie centrale contre la partie centrale de ladite paroi inférieure, la partie périphérique de la membrane obturant les orifices en position de repos et se soulevant lors d'une admission de gaz comprimé.

Lors d'une admission de gaz comprimé en vue de recharger le récipient, le gaz comprimé passant par le tube de remplissage traverse les orifices prévus dans la paroi inférieure, ce qui provoque le soulèvement de la partie périphérique de la membrane, le gaz comprimé sortant de la chambre par le ou les orifices de la paroi supérieure et pénétrant dans la partie supérieure du récipient, c'est-à-dire une zone qui ne contient pas de liquide.

Après suppression de l'alimentation en gaz comprimé, la membrane reprend sa position d'étanchéité en fermant les orifices de la paroi inférieure, empêchant tout reflux de liquide au travers du tube de remplissage.

Avantageusement, il est prévu sur la paroi inférieure une collerette annulaire extérieure formant un siège pour la partie périphérique de la membrane, et une collerette annulaire intérieure formant un siège pour la partie centrale de la membrane, l'application de la membrane sur la collerette intérieure étant réalisée par une pièce d'appui de préférence annulaire et présentant de préférence sensiblement le même diamètre que la collerette intérieure, et venant s'appliquer sur la face supérieure de la membrane à l'aplomb de la collerette intérieure.

De préférence, la pièce d'appui est constituée par une jupe cylindrique intérieure d'un capot creux dont le fond constitue la paroi supérieure du boîtier et dont la paroi latérale s'engage à faible jeu dans le corps du boîtier. Le capot et le corps du boîtier définissent ainsi, en position assemblée, la chambre dans laquelle est disposée la membrane d'étanchéité.

Des moyens, tels que des nervures peuvent être prévues sur les parois en regard du corps du boîtier et du capot pour assurer l'étanchéité entre ces éléments.

Dans le but de mieux faire comprendre l'invention, on va maintenant décrire à titre d'exemple nullement limitatif un mode de réalisation en se référant au dessin annexé dans lequel :
- la figure 1 représente schématiquement, en partie en coupe, un récipient de conditionnement selon l'invention et,
- la figure 2 est une vue agrandie de l'extrémité libre du tube de remplissage en gaz comprimé du récipient de la figure 1.

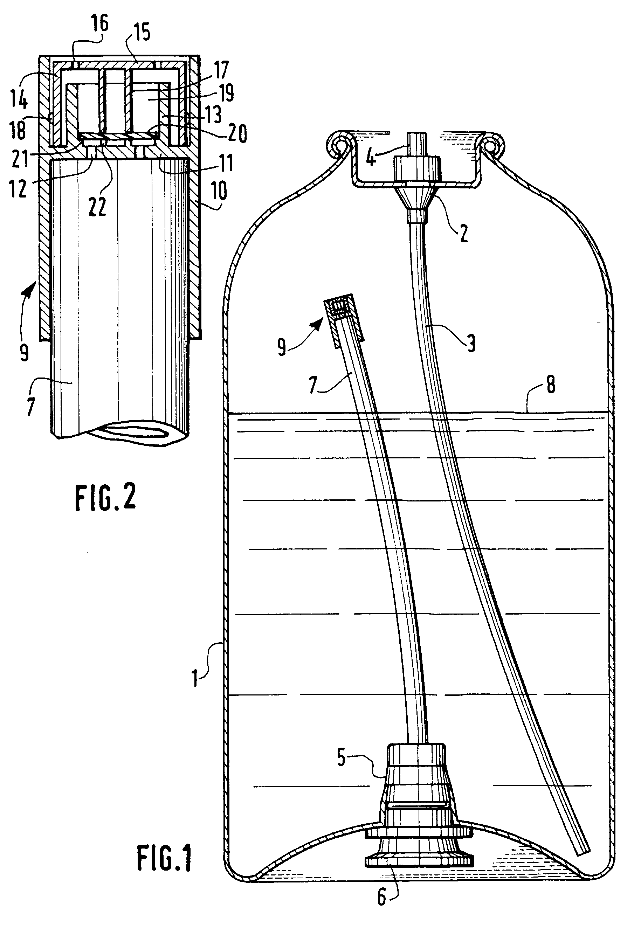

Le récipient de conditionnement de type aérosol illustré sur la figure 1 comporte, de manière conventionnelle, une enveloppe fermée 1 à l'extrémité supérieure de laquelle est montée une valve de distribution 2 reliée à un tube plongeur 3.

La tige de manoeuvre 4 de la valve de distribution est actionnée par un organe de manoeuvre (non illustré) muni d'une buse de distribution.

Un embout 5 traverse de manière étanche le fond de l'enveloppe 1, l'embout 5 étant muni à son extrémité extérieure 6 de moyens pour le raccordement à une source de gaz, notamment d'air comprimé.

A l'extrémité intérieure de l'embout 5, se trouve raccordé un tube de remplissage 7 qui, comme on le voit sur la figure 1, présente une longueur suffisante pour déboucher au-dessus de la surface 8 du liquide contenu dans le récipient.

A l'extrémité libre du tube de remplissage 7 est monté un dispositif d'étanchéité désigné globalement par 9, et dont on voit mieux la structure sur la figure 2.

Le dispositif d'étanchéité 9 illustré présente une forme générale cylindrique et comporte un corps de boîtier creux 10 divisé par une paroi transversale 11 pourvue d'orifices traversants 12.

La paroi 11 comporte une jupe intérieure cylindrique 13 s'étendant vers le haut sur le dessin.

Le corps de boîtier 10 est fermé à sa partie supérieure par un élément en forme de capot 14 muni d'une paroi de fond 15 constituant en position assemblée la paroi supérieure du boîtier, cette paroi 15 comportant des orifices traversants 16 et étant munie d'une jupe intérieure cylindrique 17.

Le capot 14 et le corps de boîtier 10 sont dimensionnés de telle manière que le capot puisse être engagé à faible jeu dans la partie supérieure du corps de boîtier, l'étanchéité entre les deux pièces pouvant être favorisée par la présence d'une nervure annulaire 18 à la périphérie de la paroi latérale du capot.

Dans la position assemblée illustrée à la figure 2, le corps de boîtier 10 et le capot 14 définissent, à l'état assemblé, une chambre 19 délimitée à sa partie inférieure par la paroi 11, à sa partie supérieure par la paroi 15 et latéralement par la paroi latérale du capot 14.

Les jupes 13 et 17 mentionnées précédemment s'étendent dans cette chambre 19 respectivement depuis la paroi inférieure 11 et la paroi supérieure 15.

Dans cette chambre 19 est également disposée une membrane en forme de disque 20, réalisée par exemple en matériau élastomère, la membrane, réalisée en forme de disque, présentant un diamètre extérieur correspondant au diamètre intérieur de la jupe 13 et reposant d'une part sur une collerette annulaire extérieure 21 en saillie vers le haut de la paroi inférieure 11 et d'autre part sur une collerette annulaire intérieure 22 en saillie vers le haut de la paroi inférieure 11 dans une partie centrale de celle-ci.

Les orifices 12 de la paroi 11 qui permettent la communication entre la chambre 19 et le tube de remplissage 7 engagé dans la partie tubulaire inférieure du corps de boîtier 10, sont agencés autour de la collerette intérieure 22.

Dans un exemple de réalisation, il est prévu trois orifices 12, de forme oblongue, disposés en étant équiangulairement répartis autour de la collerette intérieure 22.

Comme on le voit sur la figure 2, dans la position assemblée, la jupe 17 qui présente un diamètre sensiblement voisin de celui de la collerette 22 vient s'appliquer contre la face supérieure de la membrane 20, dans la partie centrale de celle-ci, la membrane étant ainsi immobilisée dans sa partie centrale par pincement entre la jupe 17 et la collerette 22.

Cette immobilisation de la membrane dans sa partie centrale assure que seule la partie périphérique de la membrane se soulève lors d'une admission de gaz comprimé, ce qui assure une déformation limitée contrôlée de la membrane. La suppression de l'alimentation en gaz comprimé entraîne le retour de la membrane 20 à sa position de repos illustrée à la figure 2 assurant l'obturation fiable des orifices 12 et empêchant tout reflux de liquide au travers du tube 7.

La membrane 20 peut être réalisée en tout matériau approprié et présenter une forme plane ou légèrement bombée.

Afin de favoriser la coopération de la membrane 20 avec les collerettes 21 et 22 et la jupe 17, on peut prévoir sur les faces supérieure et inférieure de la membrane des gorges annulaires de diamètres correspondants.

## Revendications

1. Récipient de conditionnement de type aérosol, rechargeable en gaz comprimé, comportant une enveloppe extérieure (1) munie, de préférence dans sa paroi de fond, d'un embout de remplissage (5) traversant de manière étanche la paroi de l'enveloppe, pourvu à son extrémité extérieure (6) de moyens pour le raccordement à une source de gaz comprimé et raccordé intérieurement à un tube de remplissage (7) dont l'extrémité libre débouche dans l'enveloppe du récipient au-dessus du niveau (8) du liquide contenu dans celui-ci, comprenant un dispositif d'étanchéité (9) agencé sous forme de boîtier (10,14), de préférence cylindrique, comportant intérieurement une chambre (19) délimitée entre une paroi inférieure (11) et une paroi supérieure (15), caractérisé par le fait que le dispositif d'étanchéité (9) est monté à l'extrémité libre du tube de remplissage, ladite chambre communiquant avec le volume intérieur de l'enveloppe (1) par au moins un orifice (16) ménagé dans la paroi supérieure (15), et avec le tube de remplissage (7) par des orifices (12) ménagés dans la paroi inférieure (11) à l'extérieur d'une partie centrale de celle-ci, et ladite chambre (19) renfermant une membrane élastique (20) immobilisée dans sa partie centrale contre la partie centrale de ladite paroi inférieure (11), la partie périphérique de la membrane obturant les orifices (12) en position de repos et se soulevant lors d'une admission de gaz comprimé.

2. Récipient selon la revendication 1, caractérisé par le fait qu'il comporte dans ladite chambre (19), en saillie de la paroi inférieure (11), une collerette annulaire extérieure (21) formant un siège pour la partie périphérique de la membrane (20) et une collerette annulaire intérieure (22) formant un siège pour la partie centrale de la membrane, une pièce d'appui (17) venant s'appliquer sur la face supérieure de la membrane à l'aplomb de ladite collerette intérieure.

3. Récipient selon la revendication 2, caractérisé par le fait que la pièce d'appui est constituée par une jupe cylindrique intérieure (17) d'un capot creux (14) dont le fond constitue ladite paroi supérieure (15) et dont la paroi latérale s'engage à faible jeu dans le corps (10) du boîtier.

4. Récipient selon l'une quelconque des revendications 2 et 3, caractérisé par le fait que les orifices (12) ménagés dans la paroi inférieure (11) sont répartis autour de la collerette intérieure (22).

5. Récipient selon l'une quelconque des revendications précédentes, caractérisé par le fait qu'il est prévu dans ladite chambre (19), en saillie de la paroi inférieure (11), une jupe cylindrique (13) à l'intérieur de laquelle est disposée ladite membrane (20).

6. Récipient selon la revendication 5, caractérisé par le fait que ladite membrane (20) présente la forme d'un disque.

## Claims

1. Packaging container of the aerosol type, rechargeable with compressed gas, comprising an outer casing (1) fitted, preferably in its bottom wall, with a filling adaptor (5) which passes in a leaktight manner through the wall of the casing, is provided at its outer end (6) with means for connection to a compressed-gas source and is connected internally to a filling tube (7) the free end of which emerges in the casing of the container above the level (8) of the liquid contained in the latter, comprising a sealing device (9) arranged in the form of a case (10, 14), preferably cylindrical, internally comprising a chamber (19) defined between a lower wall (11) and an upper wall (15), characterized in that the sealing device (9) is mounted at the free end of the filling tube, the said chamber communicating with the internal volume of the casing (1) via at least one orifice (16) made in the upper wall (15), and with the filling tube (7) via orifices (12) made in the lower wall (11) outside a central part of the latter, and the said chamber (19) enclosing an elastic diaphragm (20) immobilized in its central part against the central part of the said lower wall (11), the peripheral part of the diaphragm obstructing the orifices (12) in the inactive position and being raised when compressed gas is admitted.

2. Container according to Claim 1, characterized in that it comprises, in the said chamber (19), projecting from the lower wall (11), an outer annular collar (21) forming a seat for the peripheral part of the diaphragm (20) and an inner annular collar (22) forming a seat for the central part of the diaphragm, a bearing part (17) being applied onto the upper face of the diaphragm, in line with the said inner collar.

3. Container according to Claim 2, characterized in that the bearing part consists of an inner cylindrical skirt (17), of a hollow cap (14), the base of which constitutes the said upper wall (15) and the side wall of which engages with slight play in the body (10) of the case.

4. Container according to either of Claims 2 and 3, characterized in that the orifices (12) made in the lower wall (11) are distributed around the inner collar (22).

5. Container according to any one of the preceding claims, characterized in that a cylindrical skirt (13) is provided in the said chambers (19) projecting from the lower wall (11), on the inside of which skirt the said diaphragm (20) is arranged.

6. Container according to Claim 5, characterized in that the said diaphragm (20) has the shape of a disc.

## Patentansprüche

1. Mit Druckgas wiederfüllbarer Aerosolverpackungsbehälter, umfassend eine äußere Hülle (1), die vorzugsweise in ihrer Bodenwand mit einem Füllstutzen (5) versehen ist, der die Wand der Hülle dicht durchquert, an seinem äußeren Ende (6) mit Mitteln für den Anschluß an eine Druckgasquelle versehen ist und innen an ein Füllrohr (7) angeschlossen ist, dessen freies Ende in der Hülle des Behälters oberhalb des Spiegels (8) der in diesem enthaltenen Flüssigkeit ausmündet, umfassend eine Dichtungsvorrichtung (9), die in Form eines vorzugsweise zylindrischen Gehäuses (10, 14) vorgesehen ist, das innen eine Kammer (19) aufweist, die zwischen einer unteren Wand (11) und einer oberen Wand (15) abgegrenzt ist, dadurch gekennzeichnet, daß die Dichtungsvorrichtung (9) am freien Ende des Füllrohrs montiert ist, wobei diese Kammer mit dem inneren Volumen der Hülle (1) über mindestens eine in der oberen Wand (15) vorgesehene Öffnung (16) und mit dem Füllrohr (7) über Öffnung (12) verbunden ist, die in der unteren Wand (11) außerhalb eines zentralen Teils dieser Wand vorgesehen sind, und diese Kammer (19) eine elastische Membran (20) einschließt, die in ihrem zentralen Teil gegen den zentralen Teil dieser unteren Wand (11) blockiert ist, wobei der Umfangsteil der Membran die Öffnungen (12) in Ruhestellung verschließt und sich bei einem Druckgaszutritt abhebt.

2. Behälter nach Anspruch 1, dadurch gekennzeichnet, daß er in dieser Kammer (19) an der unteren Wand (11) hervorstehend einen äußeren ringförmigen Bund (21), der einen Sitz für den Umfangsteil der Membran (20) bildet, und einen inneren ringförmigen Bund (22) aufweist, der einen Sitz für den zentralen Teil der Membran bildet, wobei ein Stützteil (17) auf der Oberseite der Membran senkrecht über diesem inneren Bund zum Aufliegen kommt.

3. Behälter nach Anspruch 2, dadurch gekennzeichnet, daß das Stützteil von einem inneren zylindrischen Mantel (17) einer hohlen Kappe (14) gebildet ist, deren Boden diese obere Wand (15) bildet und deren seitliche Wand mit geringem Spiel in den Körper (10) des Gehäuses eintritt.

4. Behälter nach einem der Ansprüche 2 und 3, dadurch gekennzeichnet, daß die in der unteren Wand (11) vorgesehenen Öffnungen (12) um den inneren Bund (22) herum verteilt sind.

5. Behälter nach einem der vorhergehenden Ansprüche, dadurch gekennzeichnet, daß in dieser Kammer (19) an der unteren Wand (11) hervorstehend ein zylindrischer Mantel (13) vorgesehen ist, in dessen Inneren diese Membran (20) angeordnet ist.

6. Behälter nach Anspruch 5, dadurch gekennzeichnet, daß diese Membran (20) die Form einer Scheibe besitzt.
